# EUROPÄISCHE PATENTANMELDUNG

(11) **EP 4 375 236 A1**
(43) Veröffentlichungstag der Anmeldung: **29.05.2024**
(21) Anmeldenummer: 22020570.2
(22) Anmeldetag: 22.11.2022
(51) Int. Cl.: C01B 3/56, B01D 53/04, B01D 53/047, C01B 3/04, B01J 19/00

(54) **ANLAGE ZUR AMMONIAKSPALTUNG**

(71) Anmelder: Linde GmbH, 82049 Pullach (DE)
(72) Erfinder: Grundwürmer, Matthias, 82049 Pullach (DE); Stenzel, Alexander, 82049 Pullach (DE); Hermann, Rainer, 82049 Pullach (DE)
(74) Vertreter: Fischer, Werner

(57) **Zusammenfassung**

Es wird eine Anlage (100) zur Ammoniakspaltung, umfassend zumindest einen Wärmetauscher (110), der dazu eingerichtet ist, einen Ammoniak enthaltenden Einsatzstrom (1) von einem ersten Temperaturniveau, auf dem der Einsatzstrom (1) der Anlage (100) zugeführt wird, auf ein zweites, über dem ersten Temperaturniveau liegendes Temperaturniveau aufzuheizen, und zumindest einen Reaktor (120), der dazu eingerichtet ist, Ammoniak bei dem zweiten Temperaturniveau zumindest teilweise in Stickstoff und Wasserstoff zu spalten, vorgeschlagen. Es ist vorgesehen, dass Anlagenteile (114, 116, 120), die im Betrieb der Anlage (100) mit Ammoniak auf dem zweiten Temperaturniveau beaufschlagt sind, zumindest teilweise ein Materialsystem aufweisen, wobei das Materialsystem zumindest eine nitridierungsresistente erste Komponente und zumindest eine auf dem zweiten Temperaturniveau mechanisch stabile zweite Komponente aufweist. Ein entsprechendes Verfahren ist ebenfalls Gegenstand der Erfindung.

## Beschreibung

Die Erfindung betrifft eine Anlage und ein Verfahren zur Ammoniakspaltung.

### Hintergrund

Bei der Ammoniakspaltung handelt es sich um die katalytische Zersetzung von Ammoniak (NH3) in die Gase Stickstoff (N₂) und Wasserstoff (H₂) gemäß 2 NH3 → N₂ + 3 H₂. Die Ammoniakspaltung ist endotherm (ΔH = +46,2 kJ/mol), wobei die Reaktionsgeschwindigkeit (Spaltungsrate) von Temperatur, Druck und dem verwendeten Katalysator (typischerweise z.B. Ru, Ni, Fe, Metallcarbide, Metallnitride, Amide, Imide) abhängt. Es reicht aus, die notwendige Reaktionswärme bereitzustellen, um die Ammoniakspaltung ablaufen zu lassen.

Die Ammoniakspaltung kann als Teil einer Wasserstoffspeichertechnologie genutzt werden, wobei Wasserstoff, beispielsweise mittels des großtechnisch etablierten Haber-Bosch-Verfahrens, zu Ammoniak verarbeitet wird, der sich erheblich besser speichern und transportieren lässt als elementarer Wasserstoff oder auch Erdgas bzw. Methan aus anderen Quellen. Die existierende Synthese- und Transportinfrastruktur für Ammoniak ist technologisch ausgereift und sicher.

In Kombination mit in Bezug auf Kohlendioxid (CO₂) emissionsfrei gewonnenem Wasserstoff hat diese Technologie damit das Potential, ein wichtiger Baustein in der zukünftigen Energieversorgung von Industrie und Mobilitätssektor zu werden.

### Offenbarung der Erfindung

Vor diesem Hintergrund werden eine Anlage und ein Verfahren zur Ammoniakspaltung mit den Merkmalen der unabhängigen Patentansprüche vorgeschlagen. Vorteilhafte Ausgestaltungen und Weiterbildungen sind Gegenstand der abhängigen Patentansprüche sowie der nachfolgenden Beschreibung.

Eine hier vorgeschlagene Anlage zur Ammoniakspaltung umfasst zumindest einen Wärmetauscher, der dazu eingerichtet ist, einen Ammoniak enthaltenden Einsatzstrom von einem ersten Temperaturniveau, auf dem der Einsatzstrom der Anlage zugeführt wird, auf ein zweites, über dem ersten Temperaturniveau liegendes Temperaturniveau aufzuheizen. Ferner umfasst die Anlage zumindest einen Reaktor, der dazu eingerichtet ist, Ammoniak bei dem zweiten Temperaturniveau zumindest teilweise in Stickstoff und Wasserstoff zu spalten.

Die Anlage zeichnet sich dadurch aus, dass Anlagenteile, die im Betrieb bei hoher Temperatur mit Ammoniak in Kontakt kommen, d.h. die auf dem zweiten Temperaturniveau mit Ammoniak beaufschlagt werden, zumindest teilweise ein Materialsystem aufweisen, das zumindest eine nitridierungsresistente erste Komponente und eine bei der hohen Temperatur mechanisch stabile zweite Komponente aufweist. Dadurch kann einer Materialversprödung in diesen zugleich chemisch und thermisch stark beanspruchten Anlagenkomponenten vorgebeugt werden, ohne die mechanische Stabilität zu gefährden. Dies wirkt sich insgesamt positiv auf die Standzeit einer derart ausgestalteten Anlage aus.

Ist hier von einem Temperaturniveau die Rede, so ist damit eine Temperatur gemeint, die nicht notwendigerweise exakt bestimmt ist oder bestimmt zu werden braucht, um die der Erfindung zugrundeliegende Idee zu verwirklichen. Dennoch liegt eine so bezeichnete Temperatur üblicherweise innerhalb eines bestimmten Bereichs um einen Mittelwert oder Zielwert. Derartige Temperaturniveaus können beispielsweise in getrennten oder einander überlappenden Bereichen liegen. Insbesondere umfassen Temperaturniveaus auch unvermeidliche Temperaturverluste. Analoges gilt für den Begriff des oder der "Druckniveaus".

Die erste Komponente kann insbesondere eine oder mehrere aus der Gruppe aus einem Metall mit einem relativen Massenanteil an Nickel, Platin und/oder Kobalt, der 50%, 60%, 70% oder 80% übersteigt, insbesondere Legierung 214 und/oder Legierung 600, und einem oder mehreren Oxiden, insbesondere der Elemente Chrom, Silizium und Aluminium, insbesondere α-Al₂O₃, umfassen. Diese Materialien zeichnen sich durch eine hohe Aufstickungsbeständigkeit aus bzw. bilden eine Oxidschicht, welche undurchlässig für atomaren Stickstoff ist. Insbesondere Chromoxid und Siliziumoxid wirken aufgrund ihrer hyperbolischen Wachstumskinetik in Hochtemperaturanwendungen schützend.

Die zweite Komponente umfasst in einigen Ausgestaltungen der Erfindung ein kriechresistentes Metall, insbesondere einen Stahl aus der Gruppe aus Stahl 1.4852 und Stahl 1.4859. Diese Materialien weisen bei den hier relevanten Temperaturen (insbesondere dem zweiten Temperaturniveau) eine hohe mechanische Stabilität auf und eignen sich daher dazu, mechanische Lasten aufzunehmen, wie sie beispielsweise durch typischerweise herrschende Druckunterschiede auftreten.

In einigen Ausgestaltungen besteht das Materialsystem aus zumindest zwei Schichten, wobei die erste Komponente eine innere, im Betrieb in Richtung des Ammoniak enthaltenden Einsatzstroms weisende Schicht bildet, und wobei die zweite Komponente eine äußere, im Betrieb von dem Ammoniak enthaltenden Einsatzstrom fortweisende Schicht des Materialsystems bildet. Somit wird in diesen Ausgestaltungen das mechanisch stabile Material, das nicht resistent gegenüber Nitridierung ist, durch die nitridierungsresistente innenliegende Schicht geschützt, während das mechanisch stabile Material in der äußeren Schicht die nitridierungsresistente aber mechanisch weniger stabile Innenschicht stützt.

Der zumindest eine Reaktor ist in einigen Ausgestaltungen befeuert. In diesen Ausgestaltungen ist der zumindest eine Wärmetauscher dazu eingerichtet, ein Abgas der Befeuerung des Reaktors als Wärmequelle zu nutzen. So kann die Wärme aus der Befeuerung besonders effizient ausgenutzt werden. Insbesondere kann in solchen Ausgestaltungen der zumindest eine Wärmetauscher dazu eingerichtet sein, Verbrennungsluft und/oder Brennstoff für die Befeuerung des Reaktors vorzuwärmen. Dadurch kann die Befeuerung eine homogene Erhitzung bereitstellen, da bereits am Eingang der Befeuerung eine hohe Temperatur vorliegt. Zudem wird die Zündung des Luft-Brennstoff-Gemischs erleichtert.

In einigen Ausgestaltungen umfasst die Anlage ferner eine Produktaufreinigungsvorrichtung stromab des zumindest einen Reaktors, die dazu eingerichtet ist, Wasserstoff aus einem zumindest Wasserstoff und Stickstoff enthaltenden Reaktorproduktstrom abzutrennen. Damit kann je nach Anwendungsfall ein Wasserstoffstrom mit der erforderlichen Reinheit bereitgestellt werden.

Insbesondere kann dabei die Produktaufreinigungsvorrichtung zumindest eine aus der Gruppe aus einer Temperaturwechseladsorptionsvorrichtung, einer Druckwechseladsorptionsvorrichtung und einer Vakuum-Druckwechseladsorptionsvorrichtung umfassen. Diese stellen besonders relevante Möglichkeiten der Abtrennung von Wasserstoff von den übrigen Bestandteilen des durch den Reaktor bereitgestellten Produktstroms dar.

Insbesondere ist das erste Temperaturniveau aus einem Bereich zwischen -50 °C und 100 °C ausgewählt und/oder das zweite Temperaturniveau aus einem Bereich zwischen 300 °C und 1000 °C ausgewählt. Damit kann flüssiger oder gasförmiger Ammoniak (erstes Temperaturniveau) importiert werden und auf eine Temperatur (zweites Temperaturniveau), bei der je nach gewähltem Katalysatorsystem die Ammoniakspaltung ablaufen kann, aufgeheizt werden.

Insbesondere ist die Anlage dazu eingerichtet, den Einsatzstrom vor dessen Einspeisung in den zumindest einen Reaktor und/oder den zumindest einen Wärmetauscher auf ein erstes Druckniveau, das aus einem Bereich zwischen 5 bar und 100 bar, insbesondere zwischen 10 bar und 80 bar, ausgewählt ist, zu verdichten. Der Einsatzstrom kann hierbei vor dessen Verdichtung auf das erste Druckniveau insbesondere im Wesentlichen Atmosphärendruck aufweisen, also beispielsweise (1±0,5) bar. Dabei kann die Anlage ferner dazu eingerichtet sein, einen gasförmigen, Wasserstoff enthaltenden Produktstrom auf einem zweiten Druckniveau abzugeben, wobei das zweite Druckniveau höchstens 5%, 10% oder höchstens 20% unterhalb des ersten Druckniveaus liegt. In solchen Ausgestaltungen kann meist auf eine Verdichtung des Produktstroms verdichtet werden, so dass Investitions- und Betriebskosten eingespart werden können.

In einem hier vorgeschlagenen Verfahren zur Ammoniakspaltung wird eine entsprechende Anlage verwendet. Zu weiteren Merkmalen und Vorteilen eines solchen Verfahrens und Ausgestaltungen hiervon sei daher auf die obigen Erläuterungen betreffend die erfindungsgemäß vorgeschlagene Anlage und ihre Ausgestaltungen ausdrücklich verwiesen, da diese hierfür in gleicher Weise gelten.

Entsprechendes gilt insbesondere für Verfahren, die unter Verwendung von Anlagen gemäß unterschiedlicher Ausgestaltungen der vorliegenden Erfindung durchgeführt werden, welche zuvor erläutert wurden.

### Kurze Beschreibung der Zeichnung

Figur 1 zeigt eine Ausgestaltung der Erfindung in schematischer Darstellung in Form eines vereinfachten Blockdiagramms und
Figur 2 veranschaulicht typische Anteile von Restedukt in Produktströmen, wie sie im Rahmen von Ausgestaltungen der Erfindung beobachtet werden können, anhand eines qualitativen Diagramms.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

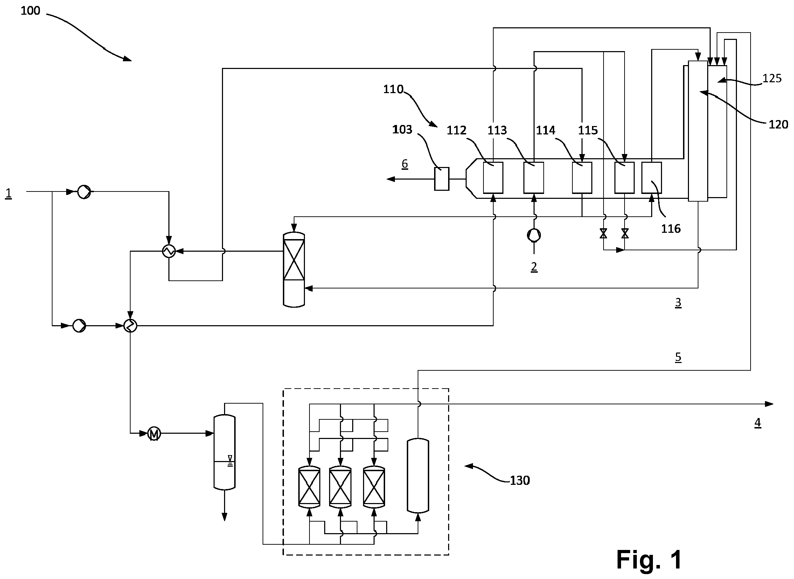

In Figur 1 ist eine Anlage gemäß einem Ausführungsbeispiel der Erfindung schematisch veranschaulicht und insgesamt mit 100 bezeichnet. Die Anlage 100 umfasst einen Wärmetauscher 110, einen Reaktor 120 sowie eine Produktaufreinigungsvorrichtung 130.

Der Reaktor 120 ist mit einer externen Befeuerung 125 ausgestattet, die zumindest einen Teil der notwendigen Reaktionswärme für die endotherme Ammoniakspaltung bereitstellt. Abgase 6 der Befeuerung 125 werden in dem Wärmetauscher 110 als Wärmequelle genutzt.

Der Wärmetauscher 110 ist in dem gezeigten Beispiel aus mehreren Wärmetauscherelementen 112, 113, 114, 115, 116 aufgebaut, die jeweils unterschiedliche Eingangs-, Zwischen- und Ausgangs- Temperaturniveaus bereitstellen können. Beispielsweise kann der Wärmetauscher den Einsatzstrom auf einem ersten Temperaturniveau im Bereich von 50 °C bis 100 °C empfangen und auf ein zweites Temperaturniveau in einem Bereich von 300 °C bis 700 °C aufheizen.

Die Befeuerung 125 kann den Reaktor 120 beispielsweise auf eine Betriebstemperatur im Bereich von 750 °C bis 1000 °C aufheizen.

Zumindest ein Teil des Reaktors 120 und/oder des Wärmetauschers 110 sind mit einem Materialsystem, das eine erste, nitridierungsresistente Komponente und eine zweite, kriechfeste Komponente aufweist, ausgestattet. Beispielsweise kann die zweite Komponente ein Stahl, z.B. Stahl 1.4852 und/oder Stahl 1.4859 sein. Die erste Komponente kann insbesondere eine nickelreiche Legierung und/oder ein Aluminiumoxid sein.

In einem Ausführungsbeispiel kann die erste Komponente mit einer solchen Nickellegierung, z.B. Legierung 600 oder Legierung 214, beschichtet sein. Die Beschichtung kann beispielsweise durch Aufpressen, Heißwalzen, Kaltwalzen, Explosionsbeschichtung, Aufschweißen oder Zentrifugenguss aufgebracht werden. Im Falle einer Beschichtung mit einer Nickellegierung als der ersten Komponente, kann beispielsweise ein 1 bis 10 mm dicke Schicht, insbesondere eine 2 bis 5 mm dicke Schicht, der ersten Komponente auf die zweite Komponente aufgetragen werden. Eine weitere Umsetzungsmöglichkeit, insbesondere bei rohrförmigen Bauteilen aus dem Materialsystem, besteht darin, ein Bauteil, das im Wesentlichen aus der ersten Komponente des Materialsystems gefertigt ist, in ein Bauteil, das im Wesentlichen aus der zweiten Komponente des Materialsystems gefertigt ist, einzubringen. Dabei ist es zweckmäßig, wenn die Außenmaße des Bauteils aus der ersten Komponente im Wesentlichen mit den Innenmaßen des Bauteils aus der zweiten Komponente übereinstimmen. Beispielsweise kann ein Rohrelement aus der ersten Komponente in ein Rohrelement aus der zweiten Komponente eingeschoben werden. Dabei ist es in einigen Ausgestaltungen auch vorgesehen, mittels thermischer Dehnung des Außenrohrs und/oder thermischer Schrumpfung des Innenrohrs während der Montage einen nach der Montage mechanisch festen Materialverbund herzustellen.

In einem weiteren Ausführungsbeispiel kann als die erste Komponente ein Aluminiumoxid, beispielsweise α-Al₂O₃ , gewählt werden. In einem solchen Ausführungsbeispiel kann eine 10 bis 500 µm dicke Schicht, insbesondere eine zwischen 20 und 200 µm dicke Schicht, der ersten Komponente auf die zweite Komponente aufgebracht werden. Beispielsweise kann dazu ein Schlickerbeschichtungsverfahren (engl. slurry coating), chemische Dampfabscheidung (engl. chemical vapor deposition, CVD), physikalische Dampfabscheidung (engl. physical vapor deposition, PVD) oder ein Packzementierungsverfahren verwendet werden.

Diese beiden genannten Optionen können auch miteinander kombiniert werden, so dass beispielsweise zunächst eine Nickellegierung auf einen Stahlbaukörper aufgebracht wird, und anschließend die nickelreiche Schicht mit Aluminium angereichert wird, damit sich eine dichte Aluminiumoxidschicht bildet.

Im Betrieb der Anlage wird ein ammoniakhaltiger Frischeinsatz bzw. Einsatzstrom 1 (z.B. mehr als 90%, 95%, 98%, 99% oder 99,9% Ammoniak) in dem Wärmetauscher 110 vorgeheizt und in dem Reaktor 120 zumindest teilweise zu Wasserstoff und Stickstoff gespalten. Ein so gebildeter Reaktorproduktstrom 3 kann neben Wasserstoff und Stickstoff auch noch nicht gespaltenen Ammoniak sowie in dem Einsatzstrom 1 enthaltene Verunreinigungen bzw. deren Folgeprodukte enthalten. Der Reaktorproduktstrom 3 wird hier auch dazu verwendet, den Einsatzstrom 1 und Brennstoff für die Befeuerung 125, der in dem gezeigten Beispiel aus dem Einsatzstrom 1 entnommen wird, vorzuwärmen, bevor diese dem eigentlichen Wärmetauscher 110 zugeführt werden.

Der damit abgekühlte Produktstrom wird der Produktaufreinigungsvorrichtung 130 zugeführt, die in dem hier gezeigten Beispiel eine Druckwechseladsorptionsvorrichtung (engl. pressure swing adsorption, PSA) umfasst, hier durch drei parallele Adsorberbehälter angedeutet. In der Produktaufreinigungsvorrichtung 130 wird ein Wasserstoffstrom erzeugt, der als Produktstrom 4 (z.B. mehr als 90%, 95%, 98%, 99% oder mehr als 99,9% Wasserstoff) an die Anlagengrenze geführt wird. Ein Teilstrom des Wasserstoffstroms 4 kann zur Regeneration der Adsorber verwendet werden und danach als Spülstrom 5 mit den aufgenommenen Verunreinigungen der Befeuerung zugeführt werden.

Wie bereits erwähnt, kann in dem hier gezeigten Beispiel ein Teil des Einsatzstromes 1, also im Wesentlichen Ammoniak, zur Befeuerung 125 des Reaktors 120 verwendet werden. Dabei wird aus dem Ammoniak mit der Verbrennungsluft Wasser(dampf) und Stickstoff bzw. als Nebenprodukt auch Stickstoffoxide gebildet. Das Abgas 6 der Befeuerung 125 kann daher, bevor es ausgestoßen wird, in einem Katalysator 103 zumindest teilweise von Schadstoffen, beispielsweise Stickstoffoxiden, befreit werden.

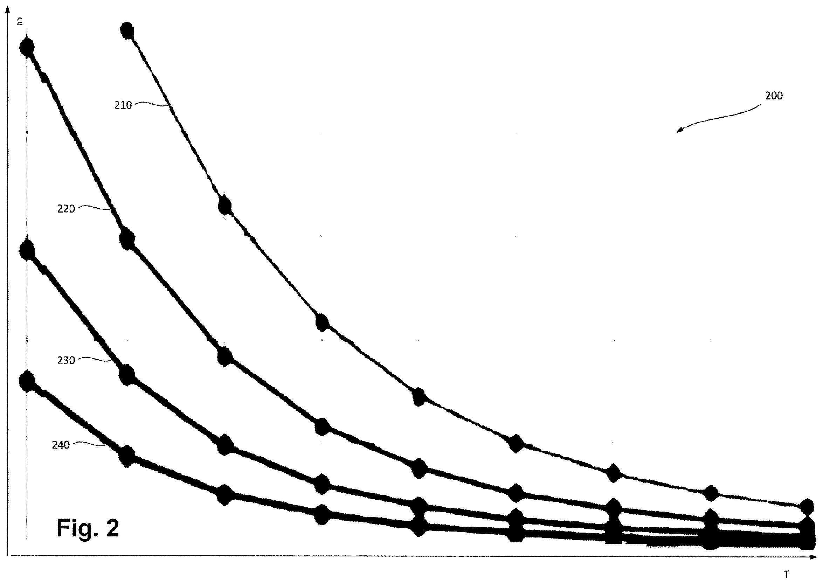

Die Zusammensetzung des Produktstroms 3 ist abhängig von den thermodynamischen Bedingungen innerhalb des Reaktor 120. Beispielhaft kann das aus Figur 2 abgelesen werden, in der ein Diagramm 200 gezeigt ist, das einen Anteil c von Ammoniak (also nicht abreagiertes Edukt) am Produktstrom 3 in Abhängigkeit der Temperatur T in dem Reaktor 120 für verschiedene Drücke abbildet.

Dabei zeigen Kurve 210 eine Situation bei einem Reaktordruck von 80 bar, Kurve 220 eine Situation bei einem Reaktordruck von 40 bar, Kurve 230 eine Situation bei einem Reaktordruck von 20 bar und Kurve 240 eine Situation bei einem Reaktordruck von 10 bar. Es kann also verallgemeinernd festgestellt werden, dass mit sinkendem Reaktordruck der Ammoniakschlupf sinkt. Dies kann mit dem le-Chatelier'schen Prinzip erklärt werden, da es sich bei der Ammoniakspaltung um eine Gleichgewichtsreaktion handelt und dabei bei der Spaltungsreaktion das Volumen der Reaktionsteilnehmer steigt. Gleichzeitig sinkt der Ammoniakanteil mit steigender Temperatur, was mit dem endothermen Charakter der Reaktion zu erklären ist. Auch das Abgas 6 der Befeuerung 125 kann reaktive Stickstoffverbindungen enthalten, beispielsweise Stickstoffoxide, die bei den hohen Temperaturen zumindest in den Wärmetauscherelementen 115 und 116 noch zu Nitridierungsreaktionen führen könnten.

Aus diesem Grund kann es in einigen Ausgestaltungen der Erfindung vorteilhaft sein, stromab des Reaktors 120 befindliche Rohrleitungen, sowie die Außen- und/oder Innenwände zumindest eines Teils des Wärmetauschers, beispielsweise der Wärmetauscherelemente 114, 115, 116, mit dem Materialsystem auszustatten, um Nitridierungsreaktionen durch den noch hohen Anteil an reaktiven Stickstoffverbindungen zu verhindern.

Dadurch können relativ hohe Drücke und/oder Temperaturen verwendet werden, was der Effizienz der Ammoniakspaltung zuträglich ist.

## Patentansprüche

1. Anlage (100) zur Ammoniakspaltung, umfassend
zumindest einen Wärmetauscher (110), der dazu eingerichtet ist, einen Ammoniak enthaltenden Einsatzstrom (1) von einem ersten Temperaturniveau, auf dem der Einsatzstrom (1) der Anlage (100) zugeführt wird, auf ein zweites, über dem ersten Temperaturniveau liegendes Temperaturniveau aufzuheizen, und
zumindest einen Reaktor (120), der dazu eingerichtet ist, Ammoniak bei dem zweiten Temperaturniveau zumindest teilweise in Stickstoff und Wasserstoff zu spalten,
**dadurch gekennzeichnet,**
**dass** Anlagenteile (114, 116, 120), die im Betrieb der Anlage (100) mit Ammoniak auf dem zweiten Temperaturniveau beaufschlagt sind, zumindest teilweise ein Materialsystem aufweisen, wobei das Materialsystem zumindest eine nitridierungsresistente erste Komponente und zumindest eine auf dem zweiten Temperaturniveau mechanisch stabile zweite Komponente aufweist.

2. Anlage (100) nach Anspruch 1, wobei die erste Komponente eine oder mehrere aus der Gruppe aus einem Metall mit einem relativen Massenanteil an Nickel, Platin und/oder Kobalt, der 50%, 60%, 70% oder 80% übersteigt, insbesondere Legierung 214 und/oder Legierung 600, und einem oder mehreren Oxiden, insbesondere der Elemente Chrom, Silizium und Aluminium, insbesondereα-Al₂O₃, umfasst.

3. Anlage (100) nach Anspruch 1 oder 2, wobei die zweite Komponente ein kriechresistentes Metall, insbesondere einen Stahl aus der Gruppe aus Stahl 1.4852 und Stahl 1.4859, umfasst.

4. Anlage (100) nach einem der vorstehenden Ansprüche, wobei das Materialsystem aus zumindest zwei Schichten besteht, wobei die erste Komponente eine innere, im Betrieb in Richtung des Ammoniak enthaltenden Einsatzstroms (1) weisende Schicht bildet, und wobei die zweite Komponente eine äußere, im Betrieb von dem Ammoniak enthaltenden Einsatzstrom (1) fortweisende Schicht des Materialsystems bildet.

5. Anlage (100) nach einem der vorstehenden Ansprüche, wobei der zumindest eine Reaktor (120) befeuert (125) ist und wobei der zumindest eine Wärmetauscher (110) dazu eingerichtet ist, ein Abgas (6) der Befeuerung (125) des Reaktors (120) als Wärmequelle zu nutzen.

6. Anlage (100) nach Anspruch 5, wobei der zumindest eine Wärmetauscher (110) dazu eingerichtet ist, Verbrennungsluft (2) und/oder Brennstoff für die Befeuerung des Reaktors vorzuwärmen.

7. Anlage (100) nach einem der vorstehenden Ansprüche, ferner umfassend eine Produktaufreinigungsvorrichtung (130) stromab des zumindest einen Reaktors (120), die dazu eingerichtet ist, Wasserstoff (4) aus einem zumindest Wasserstoff und Stickstoff enthaltenden Reaktorproduktstrom (3) abzutrennen.

8. Anlage (100) nach Anspruch 7, wobei die Produktaufreinigungsvorrichtung (130) zumindest eine aus der Gruppe aus einer Temperaturwechseladsorptionsvorrichtung, einer Druckwechseladsorptionsvorrichtung und einer Vakuum-Druckwechseladsorptionsvorrichtung umfasst.

9. Anlage (100) nach einem der vorstehenden Ansprüche, wobei das erste Temperaturniveau aus einem Bereich zwischen -50 °C und 100 °C ausgewählt ist und/oder das zweite Temperaturniveau aus einem Bereich zwischen 300 °C und 1000 °C ausgewählt ist.

10. Anlage (100) nach einem der vorstehenden Ansprüche, die dazu eingerichtet ist, den Einsatzstrom (1) vor dessen Einspeisung in den zumindest einen Reaktor (120) und/oder den zumindest einen Wärmetauscher (110) auf ein erstes Druckniveau, das aus einem Bereich zwischen 5 bar und 100 bar, insbesondere zwischen 10 bar und 80 bar, ausgewählt ist, zu verdichten.

11. Anlage (100) nach Anspruch 10, die ferner dazu eingerichtet ist, einen gasförmigen, Wasserstoff enthaltenden Produktstrom (4) auf einem zweiten Druckniveau abzugeben, wobei das zweite Druckniveau höchstens 5%, 10% oder höchstens 20% unterhalb des ersten Druckniveaus liegt.

12. Verfahren zur Ammoniakspaltung, bei dem eine Anlag (100) gemäß einem der vorstehenden Ansprüche verwendet wird.
